## Europäisches Patentamt
## European Patent Office
## Office européen des brevets

(19)

(11) Publication number: **0 215 505**
**B1**

(12)

# EUROPEAN PATENT SPECIFICATION

(45) Date of publication of the patent specification: **10.10.90**

(51) Int. Cl.⁵: **B01D 53/34, C10K 1/12**

(21) Application number: **86201424.8**

(22) Date of filing: **15.08.86**

(54) Removing H2S from a sour gaseous stream.

(30) Priority: **23.08.85 US 769195**
**23.08.85 US 769196**

(43) Date of publication of application:
**25.03.87 Bulletin 87/13**

(45) Publication of the grant of the patent:
**10.10.90 Bulletin 90/41**

(84) Designated Contracting States:
**BE DE FR GB NL**

(56) References cited:
**EP-A- 0 066 306**
**EP-A- 0 066 309**
**EP-A- 0 066 310**
**US-A- 4 009 251**

(73) Proprietor: **SHELL INTERNATIONALE RESEARCH MAATSCHAPPIJ B.V., Carel van Bylandtlaan 30, NL-2596 HR Den Haag(NL)**

(72) Inventor: **Olson, Donald Craig, 12014 Paradise Valley Dr., Houston Texas 77078(US)**
Inventor: **Miller, John Joseph, deceased(US)**
Inventor: **Blytas, George Constantin, 14323 Apple Tree, Houston Texas 77079(US)**
Inventor: **Diaz, Zaida, 12106 Meadow Lake, Houston Texas 77077(US)**

(74) Representative: **Aalbers, Onno et al, P.O. Box 302, NL-2501 CH The Hague(NL)**

## Description

The presence of significant quantities of H$_2$S in various "sour" industrial gaseous streams poses a persistent problem. Although various procedures have been developed to remove and recover this contaminant, most such processes are deficient, for a variety of reasons.

European patent application publication No. 66 310 discloses a process for the removal of H$_2$S from a sour gaseous stream comprising contacting the sour gaseous stream in a contacting zone at a temperature below the melting point of sulphur with an aqueous reactant solution, which reactant solution comprises an ammonium form of a coordination complex of Fe(III) with nitrilotriacetic acid and an ammonium form of a coordination complex of Fe(II) with nitrilotriacetic acid, the molar ratio of the ammonium form of the coordination complex of Fe(III) with nitrilotriacetic acid to the ammonium form of the coordination complex of Fe(II) with nitrilotriacetic acid in the reactant solution is between about 0.2 and about 6, which reactant solution has a pH of between about 5 and about 8.5, under conditions to convert H$_2$S, and producing a gaseous stream having reduced H$_2$S content and an aqueous mixture containing solid sulphur and additional ammonium form of the coordination complex of Fe(II) with nitrilotriacetic acid in solution.

One of the disadvantages of such systems heretofore has been the inability to maintain sufficiently high concentrations of the chelate or complex, in particular of the Fe(II) chelate, to achieve efficient operation. Without sufficiently high levels of the complex, these processes are limited in their ability to handle streams containing significant quantities of H$_2$S. Again, the circulation of large volumes of dilute solutions to handle even moderate levels of H$_2$S involves significant capital and energy costs, especially in high pressure applications. The invention addresses these problems, and provides a novel composition and process for the resolution thereof.

To this end the process for the removal of H$_2$S from a sour gaseous stream according to the invention is characterized in that the reactant solution further contains aqueous ammonia in an amount between 0.1 and 300 mol% with respect to the amount of the ammonium forms of the coordination complexes of Fe(III) and Fe(II) with nitrilotriacetic acid.

In a suitable embodiment the process according to the invention further comprises regenerating the aqueous mixture by contacting the aqueous mixture with oxygen under conditions to convert the ammonium form of the coordination complex of Fe(II) with nitrilotriacetic acid to the ammonium form of the coordination complex of Fe(III) with nitrilotriacetic acid, and producing a regenerated aqueous reactant solution having a molar ratio of the ammonium form of the coordination complex of Fe(III) with nitrilotriacetic acid to the ammonium form of the coordination complex of Fe(II) with nitrilotriacetic acid of between about 0.5 and about 6. The regenerated aqueous reactant solution may be passed to the contacting zone for use as aqueous reactant solution therein, and prior to passing regenerated aqueous reactant solution to the contacting zone sulphur may be removed from at least a portion of the regenerated aqueous reactant solution removed from the regeneration zone.

In a further suitable embodiment the process according to the invention further comprises removing aqueous mixture from the contacting zone and removing sulphur from at least a portion of the mixture, regenerating aqueous mixture by contacting said aqueous mixture with oxygen under conditions to convert the ammonium form of the coordination complex of Fe(II) with nitrilotriacetic acid to the ammonium form of the coordination complex of Fe(III) with nitrilotriacetic acid, and producing regenerated aqueous reactant solution having a molar ratio of the ammonium form of the coordination complex of Fe(III) with nitrilotriacetic acid to the ammonium form of the coordination complex of Fe(II) with nitrilotriacetic acid of between about 0.5 and about 6, and passing regenerated aqueous reactant solution to the contacting zone for use as aqueous reactant solution therein.

Ammonium hydroxide may be added to maintain pH in the contacting zone in a range of from 5 to 8.5. Furthermore the total iron content of the reactant solution in the coordination complexes, may be between about 0.5 per cent and about 7 per cent by weight, based on the weight of the reactant solution and the iron.

To prevent degradation or decomposition of the polyvalent metal complexes the aqueous reactant solution further contains 0.01 mol to 4 mol thiosulphate ion per mol of iron.

In addition the invention also relates to a reactant solution suitable for converting H$_2$S comprising an ammonium form of a coordination complex of Fe(III) with nitrilotriacetic acid and an ammonium form of a coordination complex of Fe(II) with nitrilotriacetic acid, the molar ratio of the ammonium form of the coordination complex of Fe(III) with nitrilotriacetic acid to the ammonium form of the coordination complex of Fe(II) with nitrilotriacetic acid in the reactant solution is between about 0.2 and about 6, which reactant solution has a pH of between about 5 and about 8.5.

To provide a reactant solution which is capable to keep a large amount of iron chelate, in particular of Fe(II) chelate, in solution, the reactant solution according to the invention is characterized in that the reactant solution further contains aqueous ammonia in an amount between 0.1 and 300 mol% with respect to the amount of the ammonium forms of the coordination complexes of Fe(III) and Fe(II) with nitrilotriacetic acid.

The total iron content of the reactant solution may be between about 0.5 per cent and about 7 per cent by weight, based on the weight of iron and the solution.

To prevent degradation or decomposition of the polyvalent metal complexes the aqueous reactant solution further contains 0.01 mol to 4 mol thiosulphate ion per mol of iron.

In the specification NTA will refer to nitrilotriacetic acid. In a solution that has been used in the re-

moval of $H_2S$ from a gaseous stream, the total concentration of iron is not revealed by the sum of the concentrations of the ammonium form of the coordination complex of Fe(III) with NTA and the ammonium form of the coordination complex of Fe(II) with NTA, since other iron complex or complexes are present. It has been determined, for example, that some degradation products of the complex employed (and degradation products thereof) are soluble complexes of iron. Again, there is evidence, for example, that the ammonium form of the coordination complex of Fe(III) with NTA may be present as a dimer.

As used herein, the term "an ammonium form of a coordination complex of Fe(II) with NTA" refers to those solubilized species, which, upon precipitation, are believed to have the formula $[NH_4]$ $[(NTA)Fe(II)(H_2O)_2]$. Because of the complexity of the system, however, and the difficulty of analysis of the components, the term may also be considered as simply defining the species in the solution in which an ammonium ion and a coordination complex of Fe(II) with NTA are chemically associated or related, whatever the precise nature or character of the relationship or bonding. The term "an ammonium form of a coordination complex of Fe(III) with NTA" refers, correspondingly, to the Fe(III) species in the solution. The maximum solubility limit of an ammonium form of a coordination complex of Fe(II) with NTA is about 0.5 M in unused solution.

As noted, the solutions employed will contain aqueous ammonia. As used herein, the term "aqueous ammonia" is understood to include dissolved ammonia, ammonium hydroxide, and ammonium ion, as understood from Advanced Inorganic Chemistry, 3rd edition; F.A. Cotton and G. Wilkinson, especially page 349. The aqueous ammonia is present in addition to the ammonium ion associated with or combined with the coordination complex of Fe(III) with NTA and the coordination complex of Fe(II) with NTA. The quantity will vary, but will be at least about 0.1 percent, on a molar basis, with respect to the total quantity of the ammonium forms of the coordination complexes of Fe(III) and Fe(II) with NTA used. Preferably, the aqueous ammonia will be present from, for example, 0.1 percent, to 200 or 300 percent, or more, on a molar basis, with respect to the quantity of the ammonium forms of the coordination complexes of Fe(III) and Fe(II) with NTA present. In practice, this quantity may be achieved by adjusting the pH of the solution with ammonium hydroxide or carbonate to the levels described herein after. Ammonium compounds having salt forming anions, with the carbonate exception, are not desirable.

The presence of significant concentrations of sodium or potassium ions is not desired in the solution of the invention. The sodium and potassium salts of the coordination complex of Fe(II) with NTA have been determined to have undesirably low solubilities, so that they are unsuitable for high concentration operations. By avoiding these materials, the invention provides efficiencies not attainable with prior art processes. For example, since concentrations of the complexes of the invention are higher, streams having greater concentrations of $H_2S$ may

be treated, at similar throughput. Pumping costs are reduced, and vessel sizes, other factors being equal, may be reduced. As noted, some sodium or potassium ions are tolerable, provided that they are not present in sufficient amount to exceed the solubility of sodium or potassium coordination complex of Fe(II) with NTA. In this regard, minor quantities of sodium or potassium containing additives or buffers may be present.

For this reason, pH adjustment in the process of the invention is accomplished by the use of ammonium hydroxide or carbonate. Prior art practice of utilization of sodium hydroxide, potassium hydroxide, or sodium or potassium carbonates, is generally unsuited to the invention. The pH in the contacting zone will preferably be maintained in a range of from about 5 to 8.5, preferably 6.5 to 8.5, and in the regenerator, from about 7 to 8.5.

It has been found that minor amounts of thiosulphate ion, preferably supplied as ammonium thiosulphate, are useful in inhibiting degradation of the ammonium form of coordination complexes of iron with NTA. The combination of components, parameters and steps disclosed herein provides a process in which degradation rates of coordination complexes may be lowered to a degree believed previously unattainable. The thiosulphate may be supplied as the alkali metal salt, e.g., lithium, sodium or potassium, provided the solubility considerations noted in regard to the ammonium form of the coordination complex of Fe(II) with NTA are taken into account. The thiosulphate ion is supplied in an amount sufficient to inhibit degradation. Generally, the thiosulphate ion may be supplied in a concentration of about 0.2 to 2.5 mol/l, preferably about 0.1 to 0.95 mol/l. The ion should be supplied in a ratio of about 0.01 to 4 mol, preferably 0.1 to 0.95 mol, of thiosulphate ion per mol of iron present, based on the total concentration of the ammonium forms of the coordination complexes of iron and NTA.

As noted, the regeneration of the reactant is accomplished by the utilization of oxygen, preferably as air. The oxygen will accomplish two functions, the oxidation of Fe(II) of the reactant to the Fe(III), and the stripping of any dissolved gas from the mixture. The oxygen (in whatever form supplied) is supplied in a stoichiometric equivalent or excess with respect to the amount of the ammonium form of the coordination complex of Fe(II) with NTA present in the mixture. Preferably, the oxygen is supplied in an amount of from about 20 percent to about 300 percent excess.

As used herein, the term "oxygen" is not limited to "pure" oxygen, but includes air, air-enriched with oxygen, or other oxygen-containing gases.

The particular type of sour gaseous stream treated is not critical, the only practical limitation being the reactivity of the stream itself with the solution employed, as will be evident to those skilled in the art. Streams particularly suited to removal of $H_2S$ by the practice of the invention are, as indicated, naturally-occurring gases, recycled $CO_2$ used in enhanced oil recovery, synthesis gases, process gases, and fuel gases produced by gasification procedures, e.g., gases produced by the gasification of coal, petroleum, shale, tar sands, etc. Particularly preferred are coal gasification streams, natural gas streams, produced and recycled $CO_2$ streams, and refinery feedstocks composed of gaseous hydrocarbon streams, especially those streams of this type having a low ratio of $H_2S$ to $CO_2$, and other gaseous hydrocarbon streams. The term "hydrocarbon stream(s)", as employed herein, is intended to include streams containing significant quantities of hydrocarbon (both paraffinic and aromatic), it being recognized that such streams contain significant "impurities" not technically defined as a hydrocarbon. Again, streams containing principally a single hydrocarbon, e.g., ethane, are eminently suited to the practice of the invention. Streams derived from the gasification and/or partial oxidation of gaseous or liquid hydrocarbon may be treated by the invention. The $H_2S$ content of the type of streams contemplated will vary extensively, but, in general, will range from about 0.005 percent to about 10 percent by volume. $CO_2$ content will also vary, but may range from about 0.1 percent to about 99.0 percent (or more) by volume. In this context, the invention may be used to remove $H_2S$ from various $CO_2$ streams, e.g., supercritical $CO_2$ streams.

The temperatures employed in the contacting or absorption-contact zone are not generally critical, except that the reaction is carried out below the melting point of sulphur. In many commercial applications, such as removal of $H_2S$ from natural gas to meet pipeline specifications, absorption at ambient temperatures is desired, since the cost of refrigeration would exceed the benefits obtained due to increased absorption at the lower temperature. In general, temperatures of from 10 °C to 80 °C are suitable, and temperatures of from 20 °C to 60 °C are preferred. Total contact times will range from about 1 second to about 120 seconds, with contact times of 2 seconds to 60 seconds being preferred.

Similarly, in the regeneration or stripping zone or zones, temperatures may be varied widely. Preferably, the regeneration zone should be maintained at substantially the same temperature, or somewhat lower, as the contacting zone. In general, temperatures of from about 10 °C to 80 °C, preferably 20 °C to 50 °C may be employed.

Pressure conditions in the contacting zone may vary widely, depending on the pressure of the gas to be treated. For example, pressures in the contacting zone may vary from 0.1 MPa up to 15 MPa or even 20 MPa. Pressures of from 0.1 MPa to about 10 MPa are preferred. In the regeneration zone, pressures may also be varied considerably, and will preferably range from about 0.1 MPa to about 0.3 or 0.4 MPa. Residence times for given volumes of admixture and oxygen will range from 10 minutes to 60 minutes, preferably from 20 minutes to 40 minutes. The pressure, fluid flow, and temperature relationships involved are well understood by those skilled in the art, and need not be detailed herein. Other conditions of operation for this type of reaction process are further described in US Patent No. 3,068,065 to Hartley et al, dated December 11, 1962. Preferably, the molar ratio of the nitrilotriacetic acid to total iron is from about 1.0 to 1.5. The process is preferably conducted continuously.

As indicated, the $H_2S$, when contacted, is rapidly converted in the process of the invention by the ammonium form of the coordination complex of Fe(III) with NTA to solid elemental sulphur. The amount of the ammonium form of the coordination complex of Fe(III) with NTA supplied or employed in solution is an amount sufficient to reduce the $H_2S$ concentration or content of the stream to the desired level. If total or substantially total removal is desired, the total amount supplied will generally be on the order of at least about two mol per mol of $H_2S$. Ratios of from about 2 mol to about 15 mol of the ammonium form of the coordination complex of Fe(III) with NTA per mol of $H_2S$ may be used, with ratios from about 2 mol per mol to about 5 mol of the ammonium form of the coordination complex of Fe(III) with NTA per mol of $H_2S$ being preferred. As noted, the ratio of the ammonium form of the coordination complex of Fe(III) with NTA to the ammonium form of the coordination complex of Fe(II) with NTA present in solution will normally be less than about 6, and will normally range from about 0.2 to about 6, preferably about 0.5 to about 6.

The manner of preparing the solutions of the invention is, to some extent, a matter of choice. For example, the solutions employed in the process of the invention may be prepared by reaction of elemental iron with nitrilotriacetic acid, as described in the US patent 3,115,511, followed by air oxidation, pH adjustment with ammonium hydroxide, and appropriate water dilution to achieve the desired concentration. Alternately, nitrilotriacetic acid, Fe(II) carbonate, ammonium hydroxide and oxygen (air) may be reacted to prepare the solution. The novel compositions of the invention may be produced, for example, by separate reduction of one of the above mentioned solutions until the appropriate levels of the ammonium form of the coordination complex of Fe(II) with NTA are formed, or the solutions mentioned above may simply be employed in the process of the invention until the appropriate ratios of Fe(III) to Fe(II) coordination complexes are reached.

To the solutions produced as described in the above paragraph an appropriate thiosulphate, e.g. ammonium thiosulphate, may be added.

The invention will now be described in more detail by way of example with reference to the accompanying drawings, wherein

Figure 1 shows schematically the embodiment of the invention wherein sulphur removal is accomplished in a separate step prior to regeneration; and

Figure 2 shows schematically the case where sulphur is removed in a separate step after regeneration.

All values are calculated or merely exemplary, and all flows, unless stated otherwise, are continuous.

Sour gas, e.g., natural gas containing about 0.5 percent $H_2S$, in line 1 enters a contacting zone in the form of contactor or absorber 2 into which also enters an aqueous mixture comprising an aqueous solution of 0.8 mol/l of an ammonium form of a coordination complex of Fe(III) with NTA, which mixture also contains 0.2 mol of an ammonium form of a coordination complex of Fe(II) with NTA through line 12. The solution is produced by utilization of the reducing effect of the $H_2S$ in the gaseous stream. That is, the initial solution in the contactor 2 is an aqueous solution of 1 mol/l of the ammonium form of the coordination complex of Fe(III) with NTA with a total concentration of ammonium ion and aqueous ammonia of 3 mol/l. After startup, and reaction with the $H_2S$ in the gaseous stream, regeneration, described hereinafter, is controlled so that regeneration of the ammonium form of the coordination complex of Fe(III) with NTA is not complete. Absorber or contactor 2 may be of any suitable type, such as a packed column or tray column, but is preferably a combination venturi-spray column system. Depending on the size of the gas stream, the $H_2S$ content, etc., more than one contacting zone may be employed, preferably in series. In any event, in the unit illustrated, the pressure of the feed gas is about 8.5 MPa (gauge), and the temperature of the aqueous mixture is about 45 °C. A contact time of about 120 seconds is employed in order to react all the $H_2S$. Purified or "sweet" gas leaves absorber 2 through line 3. The "sweet" gas is of a purity sufficient to meet standard requirements. In the mixture the $H_2S$ is converted to solid elemental sulphur by the ammonium form of the coordination complex of Fe(III) with NTA and the ammonium form of the coordination complex of Fe(III) with NTA is converted to the ammonium form of the coordination complex of Fe(II) with NTA. The aqueous mixture produced, containing elemental sulphur and additional ammonium form of the coordination complex of Fe(II) with NTA, is removed continuously, and sent through line 4 to a depressurization and degassing unit 5, which also serves as a sulphur concentration or thickening zone. Gas desorbed from the aqueous mixture is removed from unit 5 via line 16. A minor portion, e.g., 5 to 10 percent by volume of the mixture in the depressurization and degassing unit 5, and containing an increased sulphur concentration, is continuously withdrawn from the lower portion of the depressurization and degassing unit 5 and sent via line 6 to sulphur recovery unit 13, from which sulphur is removed via line 14.

Sulphur recovery may be accomplished in any suitable fashion, such as by filtration. Solution recovered during sulphur recovery may be returned to any suitable point in the process, if proper adjustment is made, but is preferably sent, as shown, via line 15 to a regeneration zone 8. The major portion of the aqueous mixture in the depressurization and degassing unit 5, having a reduced sulphur content, is removed via line 7 for regeneration. In regeneration zone or column 8, the mixture is contacted with excess air from line 9 to convert the ammonium form of the coordination complex of Fe(II) with NTA to the ammonium form of the coordination of Fe(III) with NTA.

Regeneration zone 8 comprises a sparged tower regenerator with cocurrent upflow of oxygen (as air), supplied via line 9, and aqueous mixture. Air velocity in the regenerator is in the range of from 0.03 to 0.1 m/s. The temperature in the column is about 45 °C, and overall pressure is about 0.2 MPa. Spent air is removed via line 11, and regenerated mixture, having a ratio of the ammonium form of the coordination complex of Fe(III) with NTA to the ammonium form of the coordination complex of Fe(II) with NTA of about 4 is returned via line 12 to contacting zone 2.

If required make-up reactant solution can be supplied via line 17.

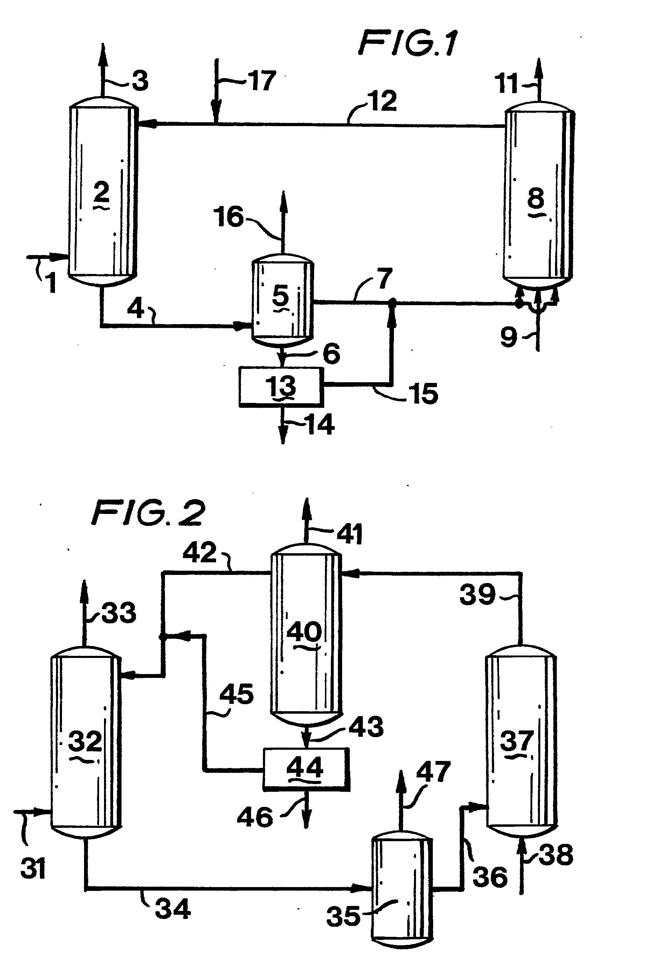

In an alternative process for removing $H_2S$ from a sour gaseous stream, the above described aqueous reactant solution further contains 0.3 mol/l of ammonium thiosulphate. The process is carried out under the same conditions as described hereinabove with reference to Figure 1.

Reference is now made to Figure 2. Sour gas e.g., natural gas containing about 0.5 percent $H_2S$, and 32 percent by volume $CO_2$, in line 31 enters contacting zone 32 (sparged column type) and contacts an aqueous solution of 0.8 mol/l of an ammonium form of a coordination complex of Fe(III) with NTA, also containing 0.2 mol/l of an ammonium form of an coordination complex of Fe(II) with NTA, the total concentration of ammonium ion and aqueous ammonia being 3 mol/l supplied via line 42. The pressure of the feed gas is about 8.5 MPa (gauge) and the temperature of the aqueous mixture is about 45 °C. A contact time of about 45 seconds is employed in order to react all the $H_2S$. Purified or "sweet" gas leaves the contacting zone 32 through line 33. The "sweet" gas is of a purity sufficient to meet standard requirements. In the aqueous mixture, the $H_2S$ is converted to elemental sulphur by the ammonium form of the coordination complex of Fe(III) with NTA. The aqueous mixture, containing elemental sulphur, a slight amount of absorbed $CO_2$, and about 0.5 mol/l of the ammonium form of the coordination complex of Fe(II) with NTA, is removed continuously and sent through line 34 to degassing unit 35. As shown, any dissolved gases are removed in degassing unit 35 by reduction of pressure via line 47, and the mixture forwarded via line 36 to regeneration zone 37.

In regeneration zone 37, mixture is treated in a similar fashion to that described with reference to Figure 1. The ammonium form of the coordination complex of Fe(II) with NTA is converted by oxygen supplied via line 38 to the ammonium form of the coordination complex of Fe(III) with NTA, while maintaining sufficient of the ammonium form of the coordination complex of Fe(II) with NTA to inhibit degradation of the coordination complexes of iron with NTA. The temperature of the regeneration zone 37 is about 45 °C, and the pressure in the column is maintained at about 0.2 MPa. The regenerated mixture, which still contains elemental sulphur and spent excess air, is sent through line 39 to degassing and thickening zone 40. Spent air is removed from zone 40 through line 41. From zone 40, which corresponds to depressurization and degassing unit 5 (see Figure 1), major and minor portions of the regenerated, solid sulphur-containing mixture are separated, the major portion being sent through line 42 to the contacting zone 32. The minor portion, e.g., 5 percent by volume of the mixture in zone 40, and having an increased sulphur content, is sent through line 43 to sulphur recovery unit 44 in the manner described in relation to Figure 1. Mixture from sulphur recovery unit 44 is returned to the system via line 45, and sulphur is removed from the sulphur recovery unit via line 46.

In an alternative process for removing $H_2S$ from a sour gaseous stream, the aqueous reactant solution described with reference to Figure 2 further contains 0.3 mol/l of ammonium thiosulphate. The process is carried out under the same conditions as described with reference to Figure 2.

While the invention has been illustrated with particular apparatus, those skilled in the art will appreciate that, except where specified, other equivalent or analogous units may be employed. The term "zones", as employed in the specification and claims, includes, where suitable, the use of segmented equipment operated in series, or the division of one unit into multiple units because of size constraints, etc. For example, a contacting zone may comprise two separate countercurrent columns in which the solution from the lower portion of the first column would be introduced into the upper portion of the second column, the partially purified gaseous material produced from the upper portion of the first column being fed into the lower portion of the second column. Parallel operation of units, is, of course, well within the scope of the invention. Mixture or solution withdrawal or introduction may be made at any suitable site(s) or loci in the particular zone. The return of solution to one or more multiple contacting units in the contacting zone from a regenerator, or the use of a common regenerator, is within the scope of the invention.

Again, as will be understood by those skilled in the art, the solutions or mixtures employed may contain other materials or additives for given purposes. For example, US Patent No. 3,933,993 discloses the use of buffering agents, such as phosphate and carbonate buffers. Similarly, other additives, such as antifoaming and/or wetting agents, may be employed.

## Claims

1. Process for the removal of $H_2S$ from a sour gaseous stream comprising contacting the sour gaseous stream in a contacting zone at a temperature below the melting point of sulphur with an aqueous reactant solution, which reactant solution comprises an ammonium form of a coordination complex of Fe(III) with nitrilotriacetic acid and an ammonium form of a coordination complex of Fe(II) with nitrilotriacetic acid, the molar ratio of the ammonium form of the coordination complex of Fe(III) with nitrilotriacetic acid to the ammonium form of the coordination complex of Fe(II) with nitrilotriacetic acid in the reactant solution is between about 0.2 and about 6, which reactant solution has a pH of between about 5 and about 8.5, under conditions to convert $H_2S$, and producing a gaseous stream having reduced $H_2S$ content and an aqueous mixture containing solid sulphur and additional ammonium form of the coordination complex of Fe(II) with nitrilotriacetic acid in solution, characterized in that the reactant solution further contains aqueous ammonia in an amount between 0.1 and 300 mol% with respect to the amount of the ammonium forms of the coordination complexes of Fe(III) and Fe(II) with nitrilotriacetic acid.

2. Process as claimed in claim 1, wherein ammonium hydroxide is added to the reactant solution to maintain the pH in the contacting zone between 5 to 8.5.

3. Reactant solution suitable for converting $H_2S$ comprising an ammonium form of a coordination complex of Fe(III) with nitrilotriacetic acid and an ammonium form of a coordination complex of Fe(II) with nitrilotriacetic acid, the molar ratio of the ammonium form of the coordination complex of Fe(III) with nitrilotriacetic acid to the ammonium form of the coordination complex of Fe(II) with nitrilotriacetic acid in the reactant solution is between about 0.2 and about 6, which reactant solution has a pH of between about 5 and about 8.5, characterized in that the reactant solution further contains aqueous ammonia in an amount between 0.1 and 300 mol% with respect to the amount of the ammonium forms of the coordination complexes of Fe(III) and Fe(II) with nitrilotriacetic acid.

## Patentansprüche

1. Verfahren zur Entfernung von $H_2S$ aus einem sauren Gasstrom, umfassend das Kontaktieren des sauren Gasstromes in einer Kontaktierzone bei einer Temperatur, die unterhalb des Schmelzpunktes von Schwefel liegt, mit einer wäßrigen Reaktandenlösung, welche Reaktandenlösung eine Ammoniumform eines Koordinationskomplexes von Fe(III), mit Nitrilotriessigsäure und eine Ammoniumform eines Koordinationskomplexes von Fe(II) mit Nitrilotriessigsäure als Reaktanden enthält, wobei das Molverhältnis der Ammoniumform des Koordinationskomplexes von Fe(III) mit Nitrilotriessigsäure zur Ammoniumform des Koordinationskomplexes von Fe(II) mit Nitrilotriessigsäure in der Reaktandenlösung zwischen ca. 0,2:1 und ca. 6:1 liegt, welche Reaktandenlösung einen pH-Wert zwischen ca. 5 und ca. 8,5 aufweist, unter für die Umwandlung von $H_2S$ geeigneten Bedingungen und das Herstellen eines Gasstromes mit reduziertem $H_2S$-Gehalt, und einer wäßrigen Mischung, enthaltend festen Schwefel und eine zusätzliche Ammoniumform des Koordinationskomplexes von Fe(II) mit Nitrilotriessigsäure in Lösung, dadurch gekennzeichnet, daß die Reaktandenlösung weiterhin wäßriges Ammoniak in einer Menge zwischen 0,1 und 300 Molprozent, bezogen auf die Menge der Ammoniumformen der Koordinationskomplexe von Fe(III) und Fe(II) mit Nitrilotriessigsäure, enthält.

2. Verfahren wie in Anspruch 1 beansprucht, in welchem Ammoniumhydroxid zu der Reaktandenlösung zugesetzt wird, um den pH-Wert in der Kontaktierzone zwischen 5 und 8,5 zu halten.

3. Reaktandenlösung, die für die Umwandlung von $H_2S$ geeignet ist, umfassend eine Ammoniumform eines Koordinationskomplexes von Fe(III) mit Nitrilotriessigsäure und eine Ammoniumform eines Koordinationskomplexes von Fe(II) mit Nitrilotriessigsäure, wobei das Molverhältnis der Ammoniumform des Koordinationskomplexes von Fe(III) mit Nitrilotriessigsäure zur Ammoniumform des Koordinationskomplexes von Fe(II) mit Nitrilotriessigsäure in der Reaktandenlösung zwischen ca. 0,2:1 und ca. 6:1 liegt, welche Reaktandenlösung einen pH-Wert von zwischen ca. 5 und ca. 8,5 aufweist, dadurch gekennzeichnet, daß die Reaktandenlösung weiterhin wäßriges Ammoniak in einer Menge zwischen 0,1 und 300 Molprozent, bezogen auf die Menge der Ammoniumform der Koordinationskomplexe von Fe(III) und Fe(II) mit Nitrilotriessigsäure, enthält.

## Revendications

1. Procédé pour l'élimination de $H_2S$ d'un courant gazeux acide comprenant la mise en contact du courant gazeux acide dans une zone de mise en contact à une température au-dessous du point de fusion du soufre avec une solution aqueuse de réactif, laquelle solution de réactif comprend une forme ammonium d'un complexe de coordination de Fe(III) avec l'acide nitrilotriacétique et une forme ammonium d'un complexe de coordination de Fe(II) avec l'acide nitrilotriacétique, le rapport molaire de la forme ammonium du complexe de coordination de Fe(III) avec l'acide nitrilotriacétique à la forme ammonium du complexe de coordination de Fe(II) avec l'acide nitrilotriacétique dans la solution de réactif étant compris entre environ 0,2 et environ 6, la solution de réactif ayant un pH compris entre environ 5 et environ 8,5, dans des conditions convenables pour transformer $H_2S$ et produire un courant gazeux ayant une teneur réduite en $H_2S$ et un mélange aqueux contenant du soufre solide et une quantité supplémentaire de forme ammonium du complexe de coordination de Fe(II) avec l'acide nitrilotriacétique en solution, caractérisé en ce que la solution de réactif contient aussi de l'ammoniac aqueux dans une quantité comprise entre environ 0,1 et 300 moles% par rapport à la quantité des formes ammonium des complexes de coordination de Fe(III) et Fe(II) avec l'acide nitrilotriacétique.

2. Procédé selon la revendication 1, dans lequel on ajoute de l'hydroxyde d'ammonium à la solution de réactif de manière à maintenir le pH dans la zone de mise en contact entre 5 et 8,5.

3. Solution de réactif utilisable pour la conversion de $H_2S$ comprenant une forme ammonium d'un complexe de coordination de Fe(III) avec l'acide nitrilotriacétique et une forme ammonium d'un complexe de coordination de Fe(II) avec l'acide nitrilotriacétique, le rapport molaire de la forme ammonium du complexe de coordination de Fe(III) avec l'acide nitrilotriacétique à la forme ammonium du complexe de coordination de Fe(II) avec l'acide nitrilotriacétique dans la solution de réactif étant compris entre environ 0,2 et environ 6, la solution de réactif ayant un pH compris entre environ 5 et environ 8,5, caractérisée en ce que la solution de réactif contient en outre de l'ammoniac aqueux à raison d'une quantité comprise entre 0,1 et 300 moles% par rapport à la quantité des formes ammonium des complexes de coordination de Fe(III) et de Fe(II) avec l'acide nitrilotriacétique.

*FIG.1*

*FIG.2*